# EUROPEAN PATENT APPLICATION

(11) **EP 1 634 631 A1**
(43) Date of publication of application: **15.03.2006**
(21) Application number: 04700006.2
(22) Date of filing: 30.03.2004
(51) Int. Cl.: A63H 30/04, H04Q 9/00

(54) **REMOTE OPERATION TOY, RADIO DEVICE AND DRIVE DEVICE USED FOR THE SAME, AND METHOD FOR SETTING ID CODE IN REMOTE OPERATION TOY**

(30) Priority: 02.04.2003 JP 2003099158
(71) Applicant: Konami Corporation, Chiyoda-ku, Tokyo 100-6330 (JP)
(72) Inventor: HAYASHI, Ryoji, c/o Konami Corporation, Tokyo 1006330 (JP)
(74) Representative: Haley, Stephen
(86) International application number: PCT/JP2004/004530
(87) International publication number: WO 2004/089492

(57) **Abstract**

A remote control toy in which an appropriate identification code can be set for both of a radio unit and a drive unit without requiring any special operation to users for selecting an identification code is provided.

In a remote control toy (1) comprising a radio unit (2) and a drive unit (3) which is remotely controlled based on a control signal from the radio unit (2), the radio unit (2) detects transmission situations of control signals from other radio units (2), and selects one unused identification code based on detection results. Moreover, the radio unit (2) generates a code notification signal to instruct setting of the selected identification code to the drive unit (3), and transmits the generated code notification signal. In the drive unit (3), the code notification signal is received, the selected identification code is discriminated based on the received code notification signal, and the discriminated identification code is set as the own identification code.

## Description

### Technical Field

The present invention relates to a remote control toy which remotely controls a drive unit according to a control signal from a radio unit, and to the radio unit, the drive unit, and so on, which are used for the remote control toy.

### Background Art

There has been known a remote control toy (Refer to the Japanese Patent Application Laid-Open No. 2002-238083) in remote control toys comprising a radio unit and a drive unit which is remotely controlled based on a control signal from the radio unit. According to the remote control toy described in Japanese Patent Application Laid-Open No. 2002-238083, any one of a plurality of predetermined identification codes is transmitted from the radio unit under a state in which the code is included in the control signal, the radio unit decides a transmit timing at which the radio unit itself transmits the control signal after receiving control signals containing identification codes transmitted from other radio units, the drive unit judges, based on the identification code set as the own one, and the identification code included in the control signal, whether remote control can be performed according to the control signal. The remote control toy in Japanese Patent Application Laid-Open No. 2002-238083 has a configuration in which both of the radio unit and the drive unit can change identification-code setting by switching operation. There is also a remote control toy with a configuration in which setting of an identification code for a drive unit can be changed by notifying the identification code, which a user has selected, using a switch at the side of an radio unit, to the drive unit.

### Disclosure of Invention

However, when the selection of the identification code is entrusted to the user, there is a possibility that the user can not enjoy a game due to disparity between the selected identification code and a correct one unless the correct identification code is selected by the user. Users who are trying to participate later in a game which has been already played is required to confirm identification codes which have been already used, and to select an identification code among ones which are not used. Accordingly, there is a possibility that the above procedures for setting cause great inconvenience to the users trying to participate in the game.

Then, the object of the present invention is to provide a remote control toy, and the like, in which an appropriate identification code can be set in a radio unit and a drive unit without any special operations required to a user for selecting the identification code. Hereinafter, the present invention will be explained.

The above-described obj ect is achieved by a remote control toy which comprises a radio unit; and a drive unit to be remotely controlled based on a control signal from the radio unit, the radio unit transmitting the control signal including any one code being set to itself among a plurality of predetermined identification codes, receiving control signals including the identification codes transmitted from other radio units, and deciding a transmit timing of an own control signal, and the drive unit judging based on the identification code being set to itself and the identification codes included in the control signals, whether remote control can be performed or not according to the control signal, wherein the radio unit has an identification-code selection device which detects control signals from the other radio units, responding to satisfaction of predetermined identification-code set conditions, and selects one unused identification code based on a detection results to set the selected code as an own identification code, a notification-signal generation device which generates a code notification signal to notify the identification code selected by the identification-code selection device to the drive unit, and a notification-signal transmission device which transmits the generated code notification signal, and the drive unit has a notification-signal receiving device which receives the code notification signal, a code discrimination device which discriminates the selected identification code, based on the received code notification signal, and a code set device which sets the discriminated identification code as an own identification code.

According to the present invention, the identification codes which have already been used in a range in which radio interference occurs with the radio units can be discriminated by receiving the control signals from other radio units and by decoding them, because the control signal sent from the radio unit includes the identification code for remote control of the drive unit. Further, by specifying an unused identification code from a plurality of predetermined identification codes, the radio unit itself can select an identification code which does not overlap with those of other radio units, and the identification code can be set as an own identification code. Moreover, the code notification signal which instructs the drive unit to set the identification code selected in the radio unit can be transmitted from the radio unit. Then, by receiving the code notification signal at the drive unit, the drive unit can discriminate the identification code to be set as the own identification code, and can set the identification code as the own code. As described above, since an identification code can be automatically set in both of the radio unit and the drive unit, users are not required to select the identification code. Accordingly, a possibility of wrong setting by users can be eliminated, and an appropriate identification code can be set at any time.

In a remote control toy according to the present invention, the identification-code set conditions are satisfiedwhen a first specific operation indispensable for starting a game is executed to the radio unit, and the identification-code selection device in the radio unit may start detection of the control signal. In this case, a unique identification code which does not overlap with those of other radio units can be set at a starting point of a game without fail. Moreover, the above configuration is convenient for users because setting of an identification code is automatically started only by operating the radio unit for starting a game. Here, the first specific operation may be appropriately set according to a configuration, and an operation method of the radio unit, and the like. However, when a power-on operation to the radio unit is assumed to be the first specific operation, automatic setting of the identification code can be executed without fail.

the identification-code selection device can discriminate a remaining identification code except identification codes included in the detected control signal among the plurality of identification codes as the unused identification code. When there are two or more identification codes which have been judged as unused, it is preferable that the identification-code selection device selects any one of the identification codes according to a predetermined order. Accordingly, there is caused no possibility that useless confusion occurs because there is regularity for selecting the identification code. For example, when numbers form the identification code, the identification code can be selected in the increasing order or the decreasing one.

In a remote control toy according to the present invention, there may be applied a configuration in which the control signal includes instruction-decide information for deciding whether setting of the identification code has been instructed or not in the code discrimination device, the notification-signal generation device ,while including in the control signal an identification code which the identification-code selection device has selected, generates the code notification signal by setting the instruction-decide information in a state in which setting of the identification code is instructed, and the notification-signal transmission device transmits the code notification signal at a transmit timing corresponding to the identification code set in the code notification signal.

In a remote control toy according to the present invention, the control signal sent to the drive unit from the radio unit includes the identification code in order to discriminate a relationship between the radio unit and the drive unit. Accordingly, the instruction decide information may be very small data such as one-bit flag. Accordingly, even if the instruction decide information is included in control signals which are repeatedly transmitted from the radio unit, there is no significant increase in the data sizes of the control signals and the time required for transmission. Furthermore, if the control signal functions as also a code notification signal by including the instruction decide information in the control signal, the code notification signal can be made or transmission can be performed by using hardware resources and software processing for transmitting and receiving control signals in a configuration, and the configuration of the radio unit is simplified. Further, since a code notification signal can be received and decoded by using hardware resources and software processing for receiving control signal, even in the drive unit, the configuration can be preferably simplified.

Here, when the code notification signal is formed by using the control signal, there may be applied a configuration in which the code discrimination device in the drive unit discriminates, based on the instruction-decide information included in the control signal, whether setting of the identification code has been instructed or not, and, when it is decided that the setting of the identification code has been instructed, the identification code included in the control signal giving the instruction is decided to be as the selected identification code. In this case, the identification code included in the control signal functions not only as information which judges whether remote control is required or not, but also as information which specifies an identification code to be set in the drive unit. Thereby, the automatic set function of the identification codes can be added without remarkable modifications in or additions to the existing control signals.

There may be also applied a configuration in which the drive unit may have a setting control device which switches enabling and disabling setting of the identification code, the code set device sets the identification code based on the code notification signal, when setting of the identification code has been enabled by the setting control device, and the code set device does not set the identification code based on the code notification signal, when setting of the identification code has been disabled by the setting control device.

When setting of the identification code based on the code notification signal is enabled at any time, there is caused a possibility that a wrong identification code is set in the drive unit for which another identification code has been already set. In a configuration in which setting of the identification code can be disabled, the above-described possibility can be removed.

There may be also applied a configuration in which, in the setting control device, setting of the identification code is enabled only for a predetermined set enabling period after a second specific operation indispensable for starting a game is performed in the drive unit, and, setting of the identification code is disabled thereafter. In this case, since setting of the identification code based on the code notification signal from the radio unit is enabled in a limited period of time from the starting point of a game, there is caused no possibility that a wrong identification code is set again at an arbitrary period after the starting point of the game. Here, the second specific operation may be appropriately set according to a configuration, and an operation method of the drive unit, and the like. However, when a power-on operation to the drive unit is assumed to be the second specific operation, there can be without fail provided an opportunity to set the identification code at the starting point of a game.

In a remote control toy according to the present invention, there may be also applied a configuration in which the identification code is set in each of the radio unit and the drive unit by storing an identification code selected by the identification-code selection device in a storage device of each of the radio unit and the drive unit. The storage device may be a volatile storage device such as RAM, which requires a memory holding operation, or a nonvolatile storage device such as EEPROM, which does not require the memory holding operation. Since the identification code is lost by the power cut-off in the former case, an embodiment in which automatic setting of the identification code is linked to the power-on operation can be preferably applied.

The radio unit may be provided with a set reservation device which reserves setting of the identification code when it is judged in the code selection device, from detection results of control signals from the other radio units, that there is no unused identification code. In this case, since the identification code is not set when all the plurality of identification codes are used, there can be removed a possibility without fail that same identification codes are set in two or more radio units and drive units to overlap one another in a range in which radio interference occurs.

In a remote control toy according to the present invention, a selection-result notification device which notifies the identification code selected by the identification code selection device to users may be provided in at least either of the radio unit and the drive unit. In this case, users can confirm the identification code which has been automatically set in the radio unit and the drive unit. Even if an identification code can be selected, it is convenient that users themselves can discriminate an unused identification code, referring to the selection result information device, when a radio unit and a drive unit without the automatic set function are added later.

A radio unit according to the present invention, the radio unit being capable of transmitting a control signal for remote control of a drive unit, including any one code being set to itself among a plurality of predetermined identification codes in the control signal to transmit, in order to specify the drive unit to be required remotely to be controlled based on the control signal, and receiving the control signals including the identification codes transmitted from other radio units to decide a transmit timing of an own control signal, wherein the radio unit comprises: an identification-code selection device which detects control signals from the other radio units, responding to satisfaction of predetermined identification-code set conditions, and selects one unused identification code based on the detection results to set the selected code as an own identification code; a notification-signal generation device which generates a code notification signal to notify the identification code selected by the identification code selection device to the drive unit; and a notification-signal transmission device which transmits the generated code notification signal.

Moreover, a drive unit according to the present invention, judging, based on an identification code included in a control signal from a radio unit and the identification code being set to itself , whether remote control can be performed or not according to the control signal, wherein the drive unit comprises: a notification-signal receiving device which receives a code notification signal sent from the radio unit in order to notify the identification code which is set by the radio to itself unit as an own identification code; a code discrimination device which discriminates the identification code which has been set by the radio unit, based on the received code notification signal; and a code set device which sets the discriminated identification code as an own identification code.

By combining the above radio units and drive units, the above described remote control toy according to the present invention can be realized.

Furthermore, a method for setting an identification code for a remote control toy according to the present invention, the remote control toy comprising a radio unit and a drive unit being remotely controlled based on a control signal from the radio unit; the radio unit transmitting the control signal including any one of identification codes set to itself among a plurality of predetermined identification codes, receiving control signals including the identification codes transmitted from other radio units and deciding a transmit timing of an own control signal; the drive unit judging, based on the identification code set to itself and the identification codes included in the control signals, whether remote control can be performed or not according to the control signal, wherein the method includes in the radio unit, a procedure for detecting control signals from the other radio units, responding to satisfaction of predetermined identification-code set conditions, and selecting one unused identification code based on the detection results to set the selected code as an own identification code, a procedure for generating a code notification signal to notify the identification code selected by the identification-code selection device to the drive unit, and a procedure for transmitting the generated code notification signal, and in the drive unit, a procedure for receiving the code notification signal, a procedure for discriminating the selected identification code based on the received code notification signal, and a procedure for setting the discriminated identification code as an own identification code.

According to the method for setting an identification code, an identification code can be automatically set in both of the radio unit and the drive unit by the similar effect to that of the above-described remote control toy. Accordingly, users are not required to select an identification code, and an appropriate identification code can be set at any time by removing a possibility of wrong settings by users.

### Brief Description of Drawings

FIG. 1 shows a schematic configuration of a remote control system according to the present invention;
FIG. 2 is a perspective view of external appearances of a radio unit and a drive unit;
FIG. 3 is a block diagram of the radio unit;
FIG. 4 is a bock diagram of a tank model;
FIG. 5 is a view showing transmit timings which transmit pieces of data for radio units shown in FIG. 2 and tank models shown in FIG. 3, and a structure of data transmitted from the radio unit;
FIG. 6 is a flow chart showing procedures for a control routine for power-on operation, which is executed by a microcomputer in the radio unit shown in FIG. 2 before the own data start to transmit after turning on the power;
FIG. 7 is a flow chart showing procedures for a control routine for normal operation, which is executed by the microcomputer in the radio unit shown in FIG. 2 after the routine in FIG. 6; and
FIG. 8 is a flow chart showing procedures for a control routine for ID setting, which is executed by a microcomputer in the tank model shown in FIG. 3 to receive ID-number notification signal from the radio unit to set the own ID number.

### Best Mode of Carrying Out the Invention

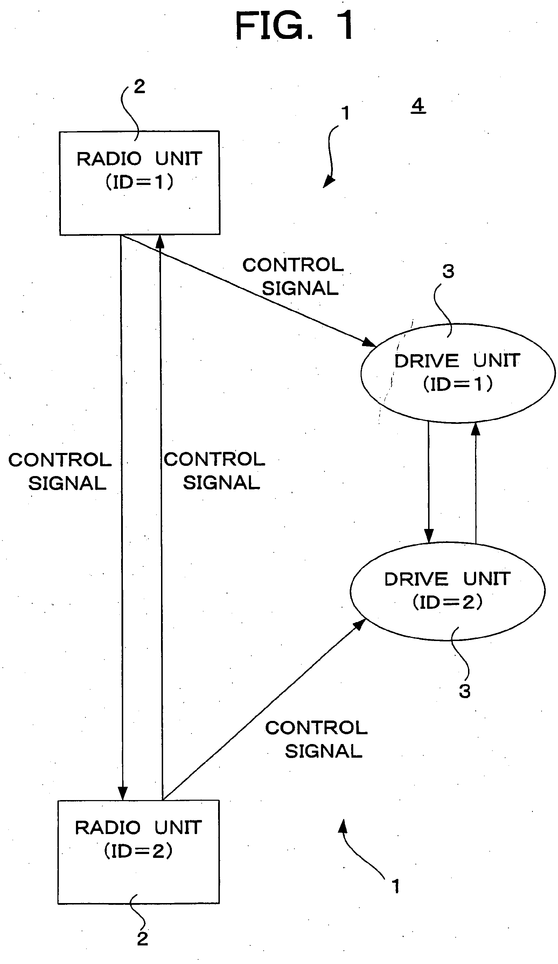

FIG. 1 shows one embodiment of a remote control toy according to the present invention. In this embodiment, a remote control toy 1 comprises a set of a radio unit 2 and a drive unit 3, and a remote control toy system 4 includes a plurality of (two sets in FIG. 1) remote control toys 1. In one remote control toy system 4, any one of identification numbers (ID numbers) of 1 to 4 is set for the radio unit 2 and the drive unit 3 as an identification code so that the identification codes do not overlap one another. The radio unit 2 and the drive unit 3, which have a same ID number with each other, form one set of remote control toy 1. The drive unit 3 is remotely controlled only by a control signal from the radio unit 2 with the same ID number as that of the drive unit 3. Further, other radio units 2 receive the control signal from the radio unit 2, and each of the other radio units 2 decides a transmit timing, at which the own control signal is transmitted, referring to ID codes in the control signals from other radio unit 2. Furthermore, signals are also transmitted and received among the drive units 3 in order to realize a game based on communication among the drive units 3.

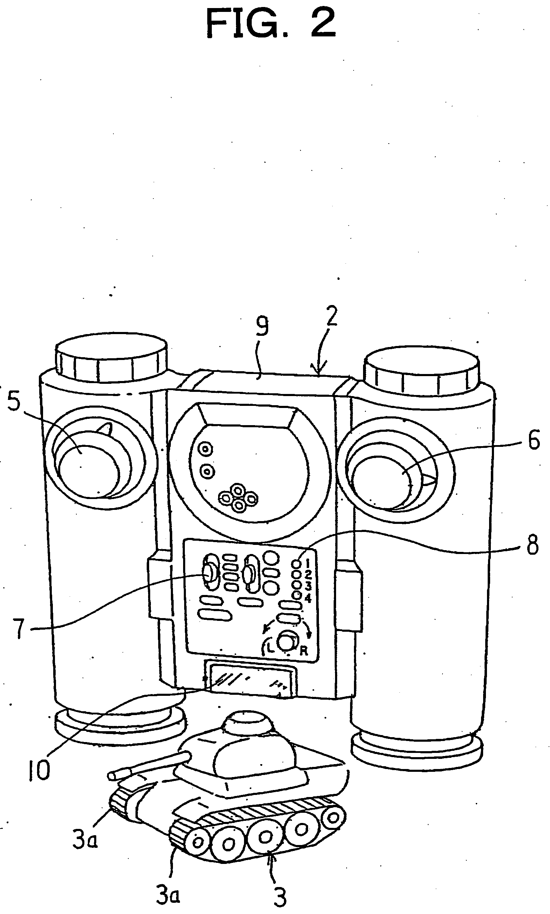

More specifically, FIG. 2 shows the remote control toy 1. In this embodiment, the drive unit 3 is formed as a tank model with a shape of a tank. Hereinafter, "drive unit 3" is called "tank model 3". In the front of the radio unit 2, a backward-and-forward movement lever 5 which instructs the tank model 3 to move backward or forward, a turn lever 6 which instructs the tank model 3 to change the moving direction, a power supply switch 7, and the like are provided as an operation member to be operated by users. Moreover, a LED indicator 8 which displays an ID number set by after-described processing is also provided there. The LED indicator 8 has a configuration in which four LEDs (light-emitting diode) each of which corresponds to an ID number of 1 to 4 one by one, are arranged in the vertical direction. However, the LED indicator 8 is not necessarily limited to the above configuration, but another configuration, for example, may be configured so that a set ID number is displayed as a numerical value, may be applied.

Moreover, a transmitting and receiving window 9 for control signal of remote control is provided on the upper part of the radio unit 2, and a ROM cartridge 10 is installed as an external storage in the lower part of the unit 2. The ROM cartridge 10 can be inserted into or extracted from a socket (not shown) of the radio unit 2. Among pieces of data required for controlling operations of the tank model 3, pieces of data to be changed according to the kind of the tank model 3, for example, parameters showing performances such as attack capability and defense capability of the tank model 3 are stored in internal ROMs (not shown) of the ROM cartridge 10.

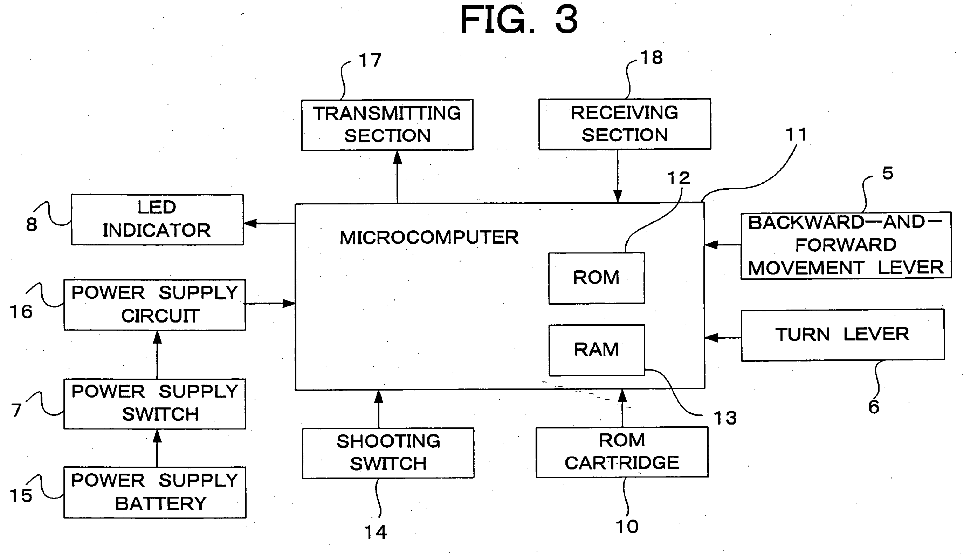

FIG. 3 is a block diagram of a control system of the radio unit 2. The radio unit 2 is provided with a microcomputer 11. The microcomputer 11 executes various kinds of calculations and control operations, which are required for remote control of the tank model 3, according to programs and data recorded in a built-in ROM 12 and an internal RAM 13. Information corresponding to operation states of a shooting switch 14, as well as information corresponding to operation states of the above-described backward-and-forward movement lever 5 and turn lever 6, is input into the microcomputer 11 as information to be referred for the above mentioned control. The shooting switch 14 is provided at a position, for example, on the back side of the radio unit 2 so that a finger of a user holding the radio unit 2 reaches the shooting switch 14.

The power supply switch 7 is arranged between a power supply battery 15 and a power supply circuit 16. When the power supply switch 7 is turned on, electric power is supplied from the power supply battery 15 to the power supply circuit 16, and electric power required for operations of the microcomputer 11 is supplied from the power supply circuit 16 to the microcomputer 11. The microcomputer 11 reads the data in the ROM cartridge 10 at turning the power on to store it in the RAM 13, and, at the same time, decides the own ID number. The method to set the ID number is described later.

A transmitting section 17 and a receiving section 18 are connected to the microcomputer 11, respectively. The microcomputer 11 generates pieces of digital data by which operations of the tank model 3 are instructed according to the operation situations of the operation members such as the backward-and-forward movement lever 5, and the generated pieces of digital data are delivered to the transmitting section 17. The transmitting section 17 converts the supplied data into an analog signal, and outputs a control signal with a predetermined carrier wave on which the analog signal has been superimposed. Infrared rays or radio waves with a specific frequency band can be used as a carrier wave. Moreover, the receiving section 18 receives control signals transmitted form other radio units 2, and converts analog signals that carrier wave components are removed from the control signals are converted into pieces of digital data to be delivered to the microcomputer 11. These transmitting section 17 and receiving section 18 are provided inside the transmitting and receiving window 9.

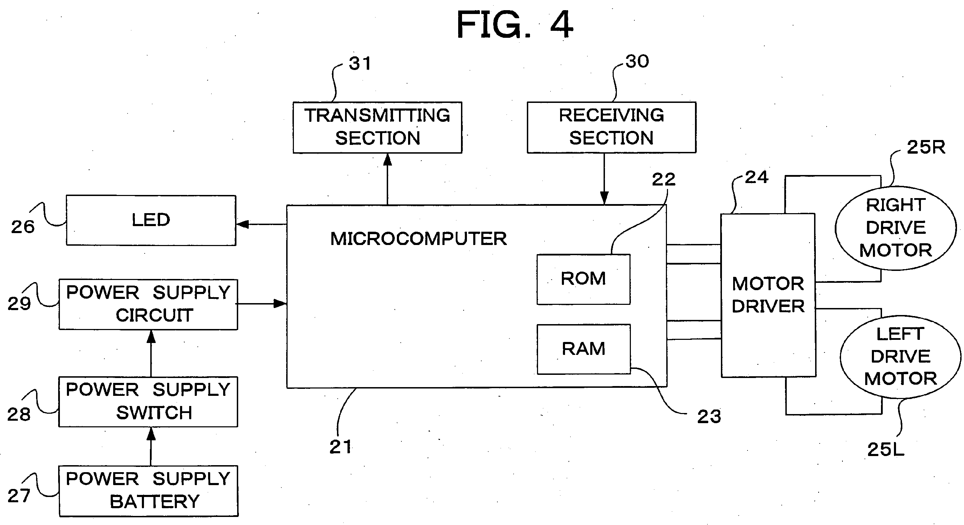

As shown in FIG. 4, the tank model 3 is also provided with a microcomputer 21. The microcomputer 21 executes various kinds of calculations and controls according to programs and data recorded in a built-in ROM 22 and an internal RAM 23, wherein the above calculations and controls are required for operation of the tank model 3 in correspondence with the control signal sent from the radio unit 2. A left drive motor 25L and a right drive motor 25R which separately control a pair of crawlers 3a (refer to FIG. 2) on either side of the tank model 3, respectively, are connected as devices to be controlled to the microcomputer 21 through a motor driver 24. Moreover, an after-described LED 26 for confirmation of ID setting is connected to the microcomputer 21. Furthermore, a power supply battery 27 and a power supply switch 28 for power supply to the microcomputer 21 and the motors 25L and 25R are provided in the tank model 3. When the power supply switch 28 is turned on, electric power is supplied from the power supply battery 27 to a power supply circuit 29, and electric power required for operations of the microcomputer 21 is supplied from the power supply circuit 29 to the microcomputer 21. The ID number of the tank model 3 is set according to an instruction from the radio unit 2, and the set ID number is stored in the RAM 23.

Moreover, a receiving section 30 and a transmitting section 31 are connected to the microcomputer 21 respectively. The receiving section 30 receives the control signal transmitted from the radio unit 2, and shooting signals transmitted from other tank models 3, and converts analog signals that carrier wave components are removed from the above signals into pieces of digital data to be delivered to the microcomputer 21. Further, the transmitting section 31 converts pieces of shooting data output from the microcomputer 21 into analog signals, and transmits shooting signals with a predetermined carrier wave on which the analog signals have been superimposed. Though infrared rays or radio waves with a specific frequency band can be used as a carrier wave for the shooting signals, it is preferable to use the infrared rays for more improved directivity of shooting. The receiving section 30 and the transmitting section 31 may be provided at appropriate positions in the tank model 3, respectively.

Here, in the present embodiment, carrier waves for control signals transmitted from all the radio units 2, and carrier waves for shooting signals transmitted from all the tank models 3 are common to one another. However, a carrier wave used for transmission from a radio unit 2, and a carrier wave used for transmission from a tank model 3 may be different from one another.

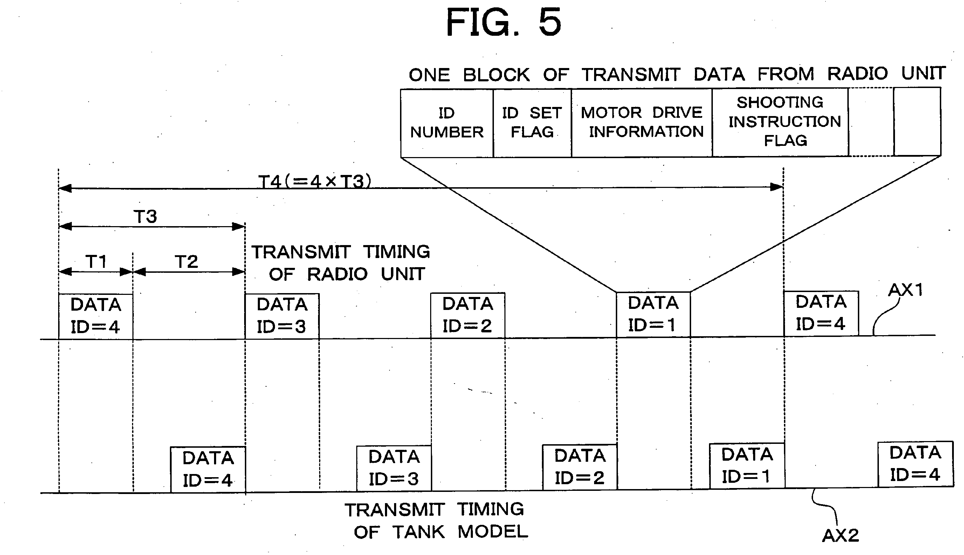

FIG. 5 shows a transmit timing at which a control signal from the radio unit 2, and a shooting signal from the tank model 3 (hereinafter, these signals are sometimes called as transmit data), and a configuration of a transmit data from the radio unit 2. A time axis AX1 in the upper part and a time axis AX2 in the lower part of FIG. 5 indicate a transmit timing of the transmit data from the radio unit 2 and a transmit timing of the transmit data from the tank model 3, respectively. As seen from FIG. 5, the transmit timings for each radio unit 2 have a duration of T1, and the transmit timings for each radio unit 2 are arranged at a predetermined order (in the decreasing order of the ID numbers here) with idle times of T2 between the transmit timings so that the timings do not overlap one another. Further, the transmit timing of each tank model 3 is set as a slightly shorter duration than the idle time of T2, and the transmit timing of each tank model 3 is set within the idle time following the transmit timing for a radio unit 2 the ID number of which is the same as the tank model 3. Thereby, a transmit timing of T3 is allocated to a set of a radio unit 2 and a tank model 3, and, in the whole remote control toy system 4, transmission from each radio unit 2 and each tank model 3 is repeated in a period of T4, because transmit-timings T3 for four sets are secured. Such allocation of the transmit timing of such transmit data is shared among all the radio units 2 and the tank models 3 forming the remote control toy system 4.

Moreover, as seen from FIG. 5, transmit data (hereinafter, called transmit data of one block) output from the radio unit 2 during one transmission period includes: an ID number; an ID set flag; motor drive information; a shooting instruction flag; and the like. The ID number is data of two bits which indicates the ID number stored in the RAM 13 of radio unit 2. The ID set flag is a flag to decide at the side of the tank model 3 whether it is instructed to store the ID number in the RAM 23 or not, and functions as instruction-decide information. When setting of the ID number (storing in the RAM 23) is instructed, "1" is set as an ID set flag. The motor drive information is data which instructs the drive speeds of the drive motors 25L and 25R which have been computed by the microcomputer 11 in the radio unit 2, based on the operation states of the backward-and-forward movement lever 5 and the turn lever 6. Furthermore, the shooting instruction flag is a flag by which it is judged at the side of the tank model 3 whether shooting has been instructed or not by operation of the shooting switch 14, and, when shooting has been instructed, for example, "1" is set.

When the microcomputer 21 in the tank model 3 receives the transmit data from the radio unit 2, the radio unit 2 judges whether the ID number included in the transmit data is in agreement with the ID number stored in the own RAM 23. When not in the agreement, the microcomputer 21 decides that operation control based on the transmit data is not required, and ignores the transmit data. On the other hand, when the transmit data having the ID number in agreement with the ID number in the RAM 23 is received, the operation of the motors 25L and 25R is controlled according to the motor drive information included in the transmit data. Moreover, when shooting is instructed by the shooting instruction flag in the transmit data having the ID number in agreement with the ID number in the RAM 23, the microcomputer 21 of the tank model 3 allows a predetermined shooting signal to be output from the transmitting section 31 at the transmit timing allocated for the own ID number. Thereby, the shooting signal is output from the tank model 3 , responding to the operation of the shooting switch 14 in the radio unit 2. When the shooting signal from the tank model 3 is received in the receiving sections 30 of other tank models 3, it means that the other tank models 3 are shot, and a predetermined action (for example, blinking of the LED 26) is executed. Since the processing by which mutual shooting among such tank models 3 is realized is not the main point of the present invention, the more detailed description will be eliminated.

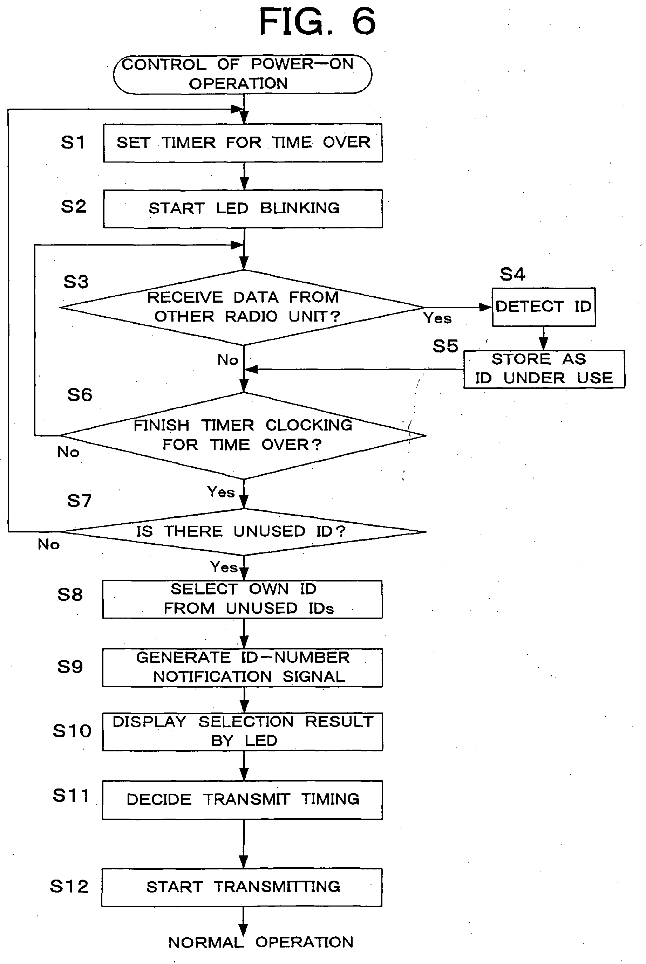

Subsequently, setting of the ID number for the radio unit 2 and the tank model 3 will be explained. FIG. 6 shows a control routine for power-on operation, which the radio unit 2 executes to set the own ID number and the transmit timing of the control signal (transmit data).

When microcomputer 11 is powered by on-operation of the power supply switch 7 in the radio unit 2, the microcomputer 11 executes the routine in FIG. 6, following a predetermined initialization processing. At a step S1, the microcomputer 11 executes setting operation of a timer for time over. In order to make all the transmit data of the ID numbers 1 to 4 detectable, the time to be set of the timer is equal to or longer than the period T4. At a subsequent step S2 , blinking of the LED indicator 8 is started. At the next step S3, it is judged whether data has been received from other radio unit 2 or not, and, when received, the processing proceeds to a step S4 for detection of the ID number included in the transmit data. At a subsequent step S5, the detected ID number is stored as the ID number under use in the RAM 13. Then, the processing proceeds to a step S6, at which it is judged whether clocking has finished in the timer for time over. When not finished, the processing returns to the step S3. When the judgement at the step S3 is No, the steps S4 and S5 are skipped.

When clocking has finished in the timer for time over, the processing proceeds to a step S7, at which it is judged whether there are left unused ID numbers which are obtained by removing the ID numbers under use, which are stored in the RAM 13 and under use, from all the predetermined ID numbers (1 to 4, here). When there is no unused ID number, the processing returns to the step S1. Therefore, when the power of the radio unit 2 is turned on, and four radio units 2 have already existed, that is, all the ID numbers 1 to 4 have been used, processing at the steps S1 to S7 is repeated until the use of any one of the radio units 2 is stopped to make an unused ID number. According to the above processing, the microcomputer 11 functions as a set reservation device. Users can know by repeating blinking of the LED indicator 8 that there is no unused ID number and an ID number can not be further set.

On the other hand, when there is an unused ID number at the step S7, the processing proceeds to a step S8, at which the ID number which is used for the radio unit 2 is selected from unused ID numbers and the selected ID number is stored in RAM 13. Thereby, the microcomputer 11 functions as an identification-code selection device. Here, when there is only one unused ID number, the only one ID number is selected. When there are a plurality of unused ID numbers, the ID number may be selected in a predetermined order. For example, the ID numbers may be selected in the increasing order.

After selecting the ID number, the processing proceeds to a step S9 , at which an ID-number notification signal (equivalent to a code notification signal) is made. By the above processing, the microcomputer 11 functions as a communication-signal generation device. The ID-number notification signal is made by setting the ID number selected at the step S8 as an ID number in the transmit data shown in FIG. 5, and, at the same time, by setting a value "1", which instructs storing of the ID number, as the ID set instruction flag. That is, the control signal functions as an ID-number notification signal by including the ID set instruction flag in the control signal from the radio unit 2.

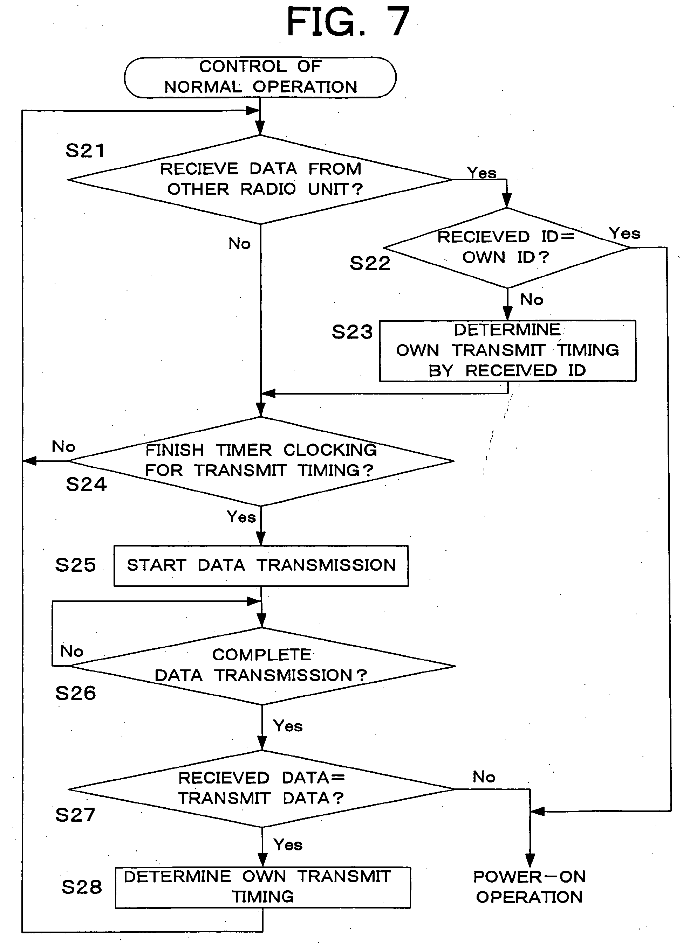

At a subsequent step S10, the selected ID number is displayed by the LED indicator 8. Thereby, the LED indicator 8 functions as a selection-result notification device. Thereafter, the processing proceeds to a step S11, at which a transmit timing corresponding to the ID number is decided. That is, the transmission schedule in FIG. 5 is studied, referring to the transmit timings of data transmitted from each radio unit 2 while repeating the processing at the steps S3 to S6, and a transmit timing corresponding to the own ID number is decided according to the study result. Then, when the decided transmit timing comes, the processing proceeds to a step S12, at which the ID-number notification signal which has been previously generated starts transmitting. Thereby, the transmitting section 17 functions as a notification-signal transmission device. The routine in FIG. 6 is completed by transmission of the ID-number notification signal, and subsequently a control routine for normal operation in FIG. 7 is executed.

Here, when there is no received transmit data while repeating the processing at the steps S3 to S6, that is, when all of the ID numbers 1 to 4 are in an unused state, the processing may proceed directly to a step S12 without waiting at the step S11, and the control signal may be started to be transmitted. In this case, the control signal is transmitted every period of T4 from the starting point of the transmission, and based on the period of transmission, the transmit timing of a radio unit 2 to be powered later is decided.

In a control routine for normal operation of FIG. 7, the microcomputer 11 judges at a step S21, in the first place, whether there has been received data from other radio units 2, and, when received, the ID number included in the data is in agreement with the own ID number, that is, the ID number stored in the RAM 13. When in the agreement, the processing returns to the control routine for power-on operation shown in FIG. 6. On the other hand, when the ID number in the received data is different from the own ID number, the processing proceeds to a step S23, at which a transmit timer is set at the own transmit timing according to the ID number in the received data. When the judgement at the step 21 is No, the steps S22 and S23 are skipped.

At a step S24 , it is judged, whether the time of the transmit timer has been up or not. When not up, the processing returns to the step S21. When it is judged that the time has been up, the processing proceeds to a step S25, at which transmit data of one block starts to be transmitted. At this time, another data is simultaneously received. Here, the data transmitted at the step S25 is generated according to the operation situations of the levers 5 and 6, and the shooting switch 14 in the radio unit 2, and the ID set flag is "0" at any time.

Then, it is judged at a subsequent step S26 whether data transmission has been completed or not. When completed, the processing proceeds to a step S27, at which the data which has been allowed to start to transmit at the previous step S25 is compared with the data which has been received in parallel with the transmitting. When not in the agreement, it is judged that radio interference has occurred, and the processing returns to the control routine for power-on operation shown in FIG. 6. When in the agreement, the processing proceeds to a step S28, because the agreement may be deemed to mean that there is no radio interference. At the step S28, the transmit timer is set at the next transmission timing (after time T4). Then, the processing returns to the step S21.

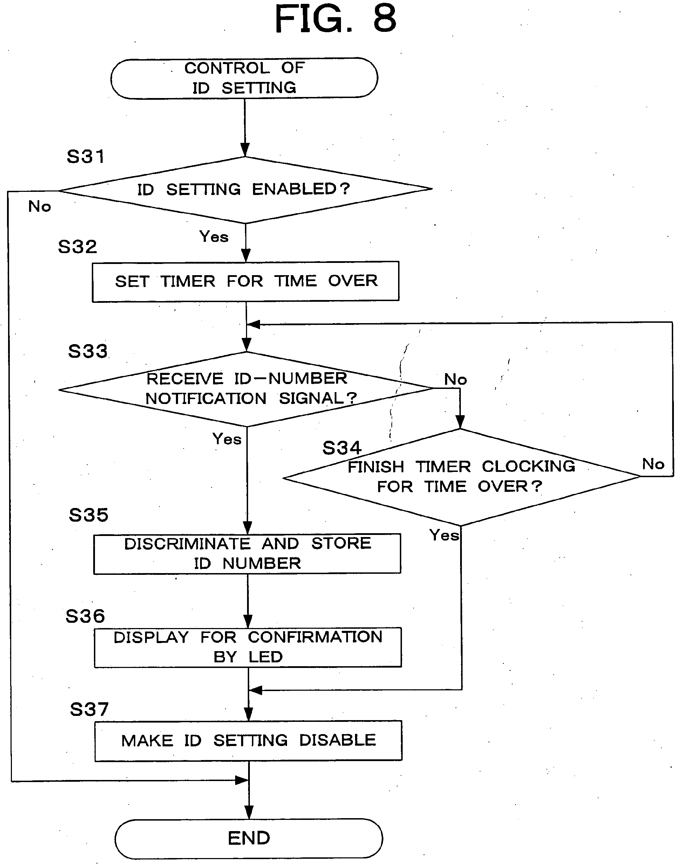

FIG. 8 shows a control routine for ID setting, which the microcomputer 21 in the tank model 3 executes to set the ID number, corresponding to transmission of the ID-number notification signal from the radio unit 2.

When the microcomputer 21 is powered by on-operation of the power supply switch 28 in the tank model 3, the microcomputer 21 repeatedly executes the routine in FIG. 8 at a predetermined period. At a step S31, the microcomputer 11 judges with a set enabling flag recorded in the RAM 23 whether the setting of the ID number has been enabled. Immediately after turning the power on, the judgement at the step S31 is Yes at any time, because the set enabling flag has been set as an initial value at a value "0" meaning that the setting is enabled. When the judgment is Yes at the step S31, the timer for time over is set at a subsequent step S32 in order to limit time when it is possible to set the ID number. When it is assumed that the radio unit 2 is powered, following the tank model 3, time required before the ID-number notification signal is transmitted is estimated, and the time set in the timer may be a value obtained by addition of an appropriate margin to the estimated value.

It is judged at a subsequent step S33 whether the ID-number notification signal has been received or not. The judgment is based on whether a control signal in which the ID set flag is set at "1" has been received from the radio unit 2. In this judgment, the ID number included in the control signal may be any one of 1 to 4. When the ID number notification signal has not been received, the processing proceeds to a step S34, at which it is judged whether clocking has finished in the timer for time over. When the clocking for the timer for time over has not finished, the processing returns to the step S33. When the clocking has finished, the processing proceeds to a step S37.

On the other hand, the processing proceeds to a step S35 when the ID-number notification signal has been received at the step S33, and, then, the ID number included in the ID-number notification signal is discriminated to store the discriminated ID number in the RAM 23. At this time, the microcomputer 21 functions as a code discrimination device and a code set device. Moreover, the receiving section 30 functions as a notification-signal receiving device. A predetermined display for confirmation is executed with the LED 26 (FIG. 4) at a subsequent step S36 so that users can confirm that the ID number has been set. Then, at the step S37, ID-number setting is disabled, that is, a value "1" meaning that the setting is disabled is set in the set enabling flag in the RAM 23 to complete the control routine for ID-number setting. Accordingly, after the ID number is set, unless the power is shut off once and on again, an ID number cannot be set. As described above, the microcomputer 21 functions as a setting control device by changing the state of the set enabling flag.

By the above-described processing, a unique ID number can be set for both of the radio unit 2 and the tank model 3 so that ID numbers for other sets and the unique ID number do not overlap one another. Thereafter, the ID number is included in transmit data whenever the transmit data is transmitted from the radio unit 2, and operation of the tank model 3 is controlled, based on the control signal including the same ID number as the own ID number. Here, when the judgement at the step S34 in FIG. 8 is Yes, because the ID number is not set in the RAM 23, the ID number in the control signal is not in agreement with the own ID number even when the tank model 3 receives any kinds of control signals from the radio unit 2 thereafter, and the tank model 3 is put into a state in which remote control can not be executed.

According to the above-described embodiment, when the radio unit 2 and the tank model 3 are independently powered, the radio unit 2 automatically detects an unused ID number which does not overlap with those of other radio units 2, and sets the detected number as an own ID number. Moreover, the set ID number, as well as the ID set instruction, is included in the ID-number notification signal to be transmitted from the radio unit 2, and the tank model 3 which receives the ID-number notification signal within a limited time after the power-on automatically sets the ID number included in the ID-number notification signal as the own ID number. Therefore, users are not required to execute any special operation for selecting the ID number, and any kinds of users can set an appropriate ID number in both of the radio unit 2 and the tank model 3.

The present invention is not limited to the above embodiment, and may be applied in various kinds of forms. In the above-described embodiment, the control signal functions as a code notification signal (ID-number notification signal), for example, by including the ID set instruction flag in the control signal periodically transmitted in order to control the motors 25L, 25R, and the like in the tankmodel 3, but the present invention is not limited by the above-described form in which the code notification signal has been generated. For example, other than the transmit data, data dedicated for notification and set instruction of the ID umber is generated before the start transmitting of the control signal (transmit data) for control of operation of the drive unit, and the generated data may be transmitted from the radio unit 2 as a code notification signal.

The code notification signal is not necessarily required to be output in synchronization with the transmit timings of pieces of transmit data of other radio units. For example, when infrared rays with high directivity is used for the carrier wave from the radio unit 2, a configuration in which the transmission range of the code notification signal is different from the transmission ranges of the control signals from other radio units causes no possibility that radio interference occurs even when the code notification signal is output at the same timing as those of the control signals from other radio units 2. In a configuration in which the frequency of the carrier wave for the code notification signal is different from that of the control signal, the code notification signal may be output at an arbitrary timing regardless of the transmit timing of the control signal.

Though setting of the set of ID number is started in the above-described present embodiment, by deeming that identification-code set conditions are satisfied by executing a first specific operation, which is the power-on operation of the radio unit 2 (on-operation of the power supply switch 7), the identification-code set conditions and the first specific operation can be appropriately changed. For example in stead of, or in addition to the on-operation of the power supply switch 7 an operation which is always executed at starting a game (for example, operation by which users hold the radio unit 2) may be set as the first specific operation.

Moreover, in the above-described embodiment, the power-on operation (the on-operation of the power supply switch 28) to the drive unit 3 is set as the second specific operation. The period after the start of the specif ic operation until the clocking of timer finishes with or without setting ID number is set as the set enablingperiod for ID number possible to be set. However, the set enabling period may be defined from various kinds of view points. If there is an indispensable operation, other than the power-on operation, for use of the drive unit, the indispensable operation may be set as the second specific operation.

Automatic setting of the identification code is not necessarily limited to the starting period of a game such as immediately after the power-on operation. There may be applied, for example, a configuration in which switches which instruct setting of the identification code are provided in the radio units and the drive units, and re-setting of the identification code is started even after a game may be started when these switches are operated. Since users are not required to select the identification code even in this case, the advantage of the present invention can be enjoyed.

Though setting results of the ID numbers are notified to users, using the LED indicator 8 in the radio unit 2, in the above-described embodiment, a selection-result notification device such as a LED indicator may be provided at the side of the drive unit.

The drive unit is not limited to the tank model in the present invention, but also various kinds of models, puppets, and robots may be used as the drive unit. Communication among the drive units is not indispensable in the present invention.

As explained above, since the present invention has a configuration in which the radio unit detects the control signals from other radio units; an unused identification code is selected as the own identification code for setting; setting of the selected identification code is notified to the drive units, using the code notification signal; the drive units receive the code notification signal and decide an identification code to be set as the own identification code; and the identification code is set, users are not required to select the identification code and there is no possibility that wrong selection by users causes setting of a not-appropriate identification code. Moreover, inconvenience in setting the identification code is also eliminated.

## Claims

1. A remote control toy comprising: a radio unit; and a drive unit to be remotely controlled based on a control signal from the radio unit, the radio unit transmitting the control signal including any one code being set to itself among a plurality of predetermined identification codes, receiving control signals including the identification codes transmitted from other radio units, and deciding a transmit timing of an own control signal, and the drive unit judging based on the identification code being set to itself and the identification codes included in the control signals, whether remote control can be performed or not according to the control signal, wherein
the radio unit has an identification-code selection device which detects control signals from the other radio units, responding to satisfaction of predetermined identification-code set conditions, and selects one unused identification code based on a detection results to set the selected code as an own identification code, a notification-signal generation device which generates a code notification signal to notify the identification code selected by the identification-code selection device to the drive unit, and a notification-signal transmission device which transmits the generated code notification signal, and
the drive unit has a notification-signal receiving device which receives the code notification signal, a code discrimination device which discriminates the selected identification code, based on the received code notification signal, and a code set device which sets the discriminated identification code as an own identification code.

2. The remote control toy according to claim 1, wherein
the identification-code set conditions are satisfied when a first specific operation indispensable for starting a game is executed to the radio unit, and the identification-code selection device in the radio unit starts detection of the control signal.

3. The remote control toy according to claim 2, wherein
the first specific operation is a power-on operation to the radio unit.

4. The remote control toy according to claim 1, wherein
the identification-code selection device discriminates a remaining identification code except identification codes included in the detected control signal among the plurality of identification codes as the unused identification code.

5. The remote control toy according to claim 4, wherein
when there are two or more identification codes which have been judged as unused, the identification-code selection device selects any one of the identification codes according to a predetermined order.

6. The remote control toy according to claim 1, wherein
the control signal includes instruction-decide information for deciding whether setting of the identification code has been instructed or not in the code discrimination device, the notification-signal generation device , while including in the control signal an identification code which the identification-code selection device has selected, generates the code notification signal by setting the instruction-decide information in a state in which setting of the identification code is instructed, and the notification-signal transmission device transmits the code notification signal at a transmit timing corresponding to the identification code set in the code notification signal.

7. The remote control toy according to claim 6, wherein
the code discrimination device in the drive unit discriminates, based on the instruction-decide information included in the control signal, whether setting of the identification code has been instructed or not, and, when it is decided that the setting of the identification code has been instructed, the identification code included in the control signal giving the instruction is decided to be as the selected identification code.

8. The remote control toy according to claim 1, wherein
the drive unit has a setting control device which switches enabling and disabling setting of the identification code, the code set device sets the identification code based on the code notification signal, when setting of the identification code has been enabled by the setting control device, and the code set device does not set the identification code based on the code notification signal, when setting of the identification code has been disabled by the setting control device.

9. The remote control toy according to claim 8, wherein
the setting control device makes setting of the identification code enable only for a predetermined set enabling period after a second specific operation indispensable for starting a game is performed to the drive unit, and makes setting of the identification code disable thereafter.

10. The remote control toy according to claim 9, wherein
the second specific operation is a power-on operation to the drive unit.

11. The remote control toy according to any one of claims 1 to 10, wherein
the identification code is set in each of the radio unit and the drive unit by storing an identification code selected by the identification-code selection device in a storage device of each of the radio unit and the drive unit.

12. The remote control toy according to any one of claims 1 to 11, wherein
the radio unit has a set reservation device which reserves setting of the identification code when it is judged in the code selection device, from detection results of control signals from the other radio units, that there is no unused identification code.

13. The remote control toy according to any one of claims 1 to 12, wherein
a selection-result notification device which notifies the identification code selected by the identification-code selection device to a user is provided in at least either of the radio unit and the drive unit.

14. A radio unit for a remote control toy, the radio unit being capable of transmitting a control signal for remote control of a drive unit, including any one code being set to itself among a plurality of predetermined identification codes in the control signal to transmit, in order to specify the drive unit to be required remotely to be controlled based on the control signal, and receiving the control signals including the identification codes transmitted from other radio units to decide a transmit timing of an own control signal, wherein the radio unit comprises:
an identification-code selection device which detects control signals from the other radio units, responding to satisfaction of predetermined identification-code set conditions, and selects one unused identification code based on the detection results to set the selected code as an own identification code; a notification-signal generation device which generates a code notification signal to notify the identification code selected by the identification code selection device to the drive unit; and a notification-signal transmission device which transmits the generated code notification signal.

15. A drive unit for a remote control toy, the drive unit judging, based on an identification code included in a control signal from a radio unit and the identification code being set to itself, whether remote control can be performed or not according to the control signal, wherein
the drive unit comprises: a notification-signal receiving device which receives a code notification signal sent from the radio unit in order to notify the identification code which is set by the radio to itself unit as an own identification code; a code discrimination device which discriminates the identification code which has been set by the radio unit, based on the received code notification signal; and a code set device which sets the discriminated identification code as an own identification code.

16. A method for setting an identification code for a remote control toy comprising a radio unit and a drive unit being remotely controlled based on a control signal from the radio unit; the radio unit transmitting the control signal including any one of identification codes set to itself among a plurality of predetermined identification codes, receiving control signals including the identification codes transmitted from other radio units and deciding a transmit timing of an own control signal; the drive unit judging, based on the identification code set to itself and the identification codes included in the control signals, whether remote control can be performed or not according to the control signal, wherein the method includes
in the radio unit, a procedure for detecting control signals from the other radio units, responding to satisfaction of predetermined identification-code set conditions, and selecting one unused identification code based on the detection results to set the selected code as an own identification code, a procedure for generating a code notification signal to notify the identification code selected by the identification-code selection device to the drive unit, and a procedure for transmitting the generated code notification signal, and
in the drive unit, a procedure for receiving the code notification signal, a procedure for discriminating the selected identification code based on the received code notification signal, and a procedure for setting the discriminated identification code as an own identification code.
